# NEUE EUROPÄISCHE PATENTSCHRIFT

(11) **EP 0 346 335 B2**
(45) Veröffentlichungstag und Bekanntmachung des Hinweises auf die Entscheidung über den Einspruch: **28.09.1994**
(45) Hinweis auf die Patenterteilung: 09.01.1991
(21) Anmeldenummer: 88900816.5
(22) Anmeldetag: 20.01.1988
(51) Int. Cl.: G01P 1/02

(54) **MESSAUFNEHMER**
MEASUREMENT DETECTOR
CAPTEUR DE MESURE

(30) Priorität: 26.02.1987 DE 3706168
(43) Veröffentlichungstag der Anmeldung: 20.12.1989
(73) Patentinhaber: ROBERT BOSCH GMBH, 70442 Stuttgart (DE)
(72) Erfinder: BUCHSCHMID, Emil, D-8501 Rosstal (DE); EBENHÖH, Erich, D-8800 Ansbach (DE); HUBER, Werner, D-7052 Schwaikheim (DE); MOOG, Michael, D-7022 Leinfelden-Echterdingen 1 (DE); STRITZEL, Berthold, D-8800 Ansbach (DE)
(86) Internationale Anmeldenummer: DE8800027
(87) Internationale Veröffentlichungsnummer: WO8806735

(56) Entgegenhaltungen:
- EP-A- 0 194 213
- DE-A- 2 019 801
- DE-A- 2 154 847
- DE-U- 8 400 738
- FR-A- 2 128 827
- FR-A- 2 576 245
- US-A- 3 719 841
- Firmendruckschrift der VDO Adolf Schindling GmbH, Nr. 340.1, "Induktivgeber", L 11 = Dez. 1981

## Beschreibung

### Stand der Technik

Die Erfindung geht aus von einem Meßaufnehmer nach der Gattung des Hauptanspruchs. (DE-U-8400 738). Bei einem bekannten Meßaufnehmer ist das Anschlußkabel mit einer Kunststoffmasse umgeben und in eine Gehäuseöffnung eingesetzt. Dadurch kann das Anschlußkabel beim Einbau oder bei Betrieb in der Gehäuseöffnung leicht gelockert werden, so daß die elektrischen Kontakte abreißen können. Ferner kann durch die entstehenden Schlitze Feuchtigkeit in das Innere des Meßaufnehmers eindringen und die Meßwerte verfälschen, bzw. den Meßaufnehmer z.B. durch Korrosion unbrauchbar machen.

### Vorteile der Erfindung

Der erfindungsgemäße Meßaufnehmer mit den kennzeichnenden Merkmalen des Anspruchs 1 hat demgegenüber den Vorteil, daß er sehr einfach, robust und preisgünstig baut. Mit Hilfe des Abschlußteils ist das Anschlußkabel in allen Richtungen in der Anschlußöffnung des Gehäuses befestigt. Es ist sowohl gegen zug bzw. Druck in seiner axialen Richtung als auch zugleich gegen ein Herausziehen in einer dazu etwa senkrechten Richtung gesichert.

Das Abschlußteil dient sowohl zur Fixierung des Anschlußkabels als auch als Begrenzungsteil während des Ausgießens des Gehäuses mit Kunststoff. Durch den Kunststoffverguß wird ein Eindringen von Feuchtigkeit in das Innere des Meßaufnehmers wirksam verhindert. Aufwendige Begrenzungen, die ein Auslaufen des Kunststoffs bei der Fertigung des Meßaufnehmers verhindern sollen sind nicht mehr notwendig, wodurch der Meßaufnehmer sehr preiswert herzustellen ist. Die Teile des Meßaufnehmers können in mehrere Gruppen zusammengefaßt werden, die bereits vor der Montage auf ihre Funktionsfähigkeit überprüft werden. Vor der Endfertigung, dem Ausgießen des Gehäuses des Meßaufnehmers, kann der Meßaufnehmer leicht auf seine Gesamtfunktion hin getestet werden.

Die an der Innenwand des Gehäuses angebrachte Nase ermöglicht einen einfachen Einbau und eine Fixierung der als Gruppe zusammengefaßten Meßelemente, insbesondere des Spulenkörpers. Ferner können die Meßelemente beim Vergießen nicht verkippen.

Durch die in den abhängigen Ansprüchen aufgeführten Maßnahmen sind vorteilhafte Weiterbildungen und Verbesserungen der im Anspruch 1 angegebenen Merkmale möglich.

### Zeichnung

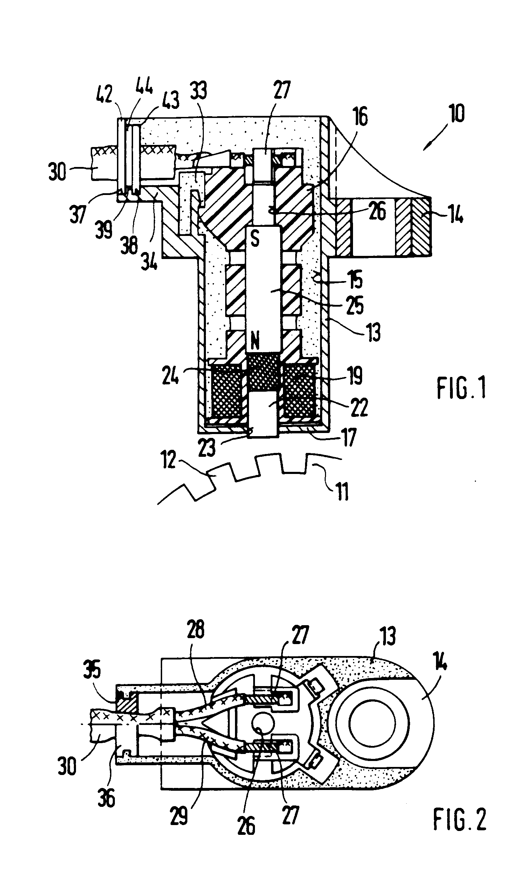

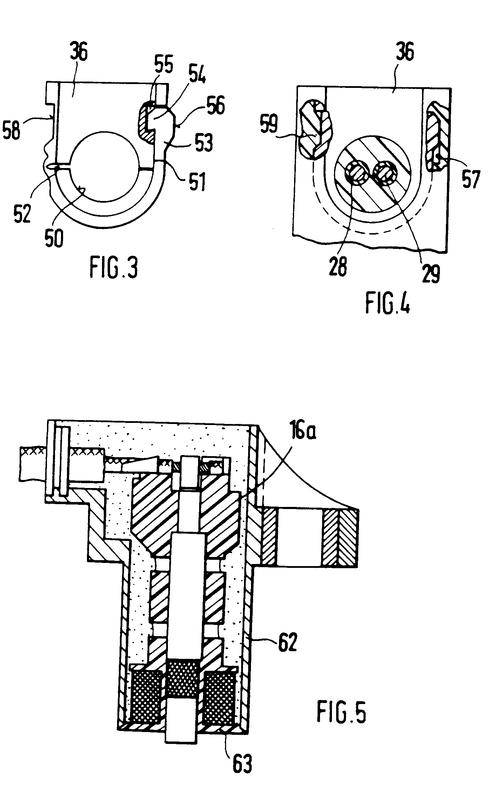

Ein Ausführungsbeispiel der Erfindung ist in der zeichnung dargestellt und in der nachfolgenden Beschreibung näher erläutert. Es zeigen Figur 1 einen erfindungsgemäßen Meßaufnehmer im Längsschnitt, Figur 2 eine Draufsicht auf den Meßaufnehmer, Figur 3 eine Draufsicht auf das Abschlußteil, Figur 4 eine Draufsicht auf das Abschlußteil im eingebauten zustand und Figur 5 eine Abwandlung des Meßaufnehmers nach Figur 1.

### Beschreibung des Ausführungsbeispiels

In Figur 1 ist mit 10 ein Meßwertaufnehmer zur Messung der Drehzahl eines nicht dargestellten Rades an einem Kraftfahrzeug bezeichnet. Der Meßwertaufnehmer 10 ist als induktiver Drehzahlfühler ausgebildet und Teil eines Antiblockiersystems des Kraftfahrzeugs. Er wirkt dabei mit einem am Rad befestigten, umlaufenden zahnkranz 11 zusammen, von dem nur ein Ausbruch mit einigen Zähnen 12 dargestellt ist. Der im Längsschnitt gezeichnete Drehzahlfühler 10 hat ein Gehäuse 13, das aus Kunststoffoder Metall hergestellt ist. Es weist einen Befestigungsflansch 14 aufmit dem es am Kraftfahrzeug befestigt werden kann Im Innern 15 des Gehäuses 13 ist ein Spulenkörper 16 angeordnet, auf dessen dem Boden 17 des Gehäuses 13 zugewandten Ende eine elektrische Wicklung 19 aufgebracht ist. Die Wicklung 19 mit dem Spulenkörper 16 sitzt auf einem Polstift 22, dessen vorderes stirnseitiges Ende durch eine mittige Gehäuseöffnung 23 ragt und mit den Zähnen 12 in Wirkverbindung steht. Das Polstück besteht aus weichmagnetischem Material, und die Zähne sind aus magnetisch wirksamen Material.

An seinem anderen Ende weist der Polstift 22 eine Aufrauhung 24 auf, die zur besseren Befestigung des Polstifts 22 im aus Kunststoff bestehenden Spulenkörper 16 dient. Darüber ist in bekannterweise ein stabförmiger Permanentmagnet 25 angeordnet. Der Spulenkörper 16 weistfernereine Bohrung 26 auf, die während des Spritzens des Spulenkörpers 16 zur Aufnahme eines Fixierteils für den Permanentmagneten 25 dient. Die Wicklung 19 ist mit Hilfe von zwei Stromschienen 27 mit den Strängen 28, 29 eines Anschlußkabels 30 verbunden. Wie aus Figur 2 ersichtlich, führen die Stromschienen 27 außerhalb des Spulenkörpers 16 parallel zum Permanentmagneten 25 zur Wicklung 19.

Mit Hilfe einer Nase 33 wird der Spulenkörper 16 im Innern des Gehäuses 13 fixiert und auf den Boden 17 aufgedrückt. Die Nase 33 kann dabei bereits direkt an der Wand des Gehäuses 13 ausgebildet oder ein zusätzliches Einsetzteil sein.

Das wannenförmige, oben offene Gehäuseoberteil 34 weist eine Öffnung 35 für das Anschlußkabel 30 auf. Die wannenförmige Ausbildung gibt dem Anschlußkabel 30 zusätzlich eine Auflagefläche und verhindert dadurch ein Herausreißen durch sein eigenes Gewicht. Am Anschlußkabel 30 ist ein plattenförmiges Abschlußtei 36 für diese Öffnung 35 befestigt. Im Bereich der Öffnung 35 sind zwei nahe beieinanderliegende Ringnuten 37, 38 im Gehäuseoberteil 34 ausgebildet, so daß dazwischen ein kleiner Steg 39 entsteht. Das Abschlußteil 36 weist an seinerAußenwand eine zwischen zwei Stegen 42, 43 angeordnete Ringnut 44 auf, mit denen es in die entsprechenden Ringnuten 37, 38 bzw. dem Steg 39 eingreift. Dadurch ist die axiale Befestigung des Anschlußkabels 30 im Gehäuse gewährleistet. Gleichzeitig schließt das Abschlußteil 36 auch die Öffnung 35 des Gehäuseoberteils 34 ab. Das Abschlußteil 36 ist so ausgebildet, daß es nach dem Einbau an seiner Oberseite mit dem Gehäuseoberteil bündig abschließt. Wie aus der Figur 1 ersichtlich sollte der dem Innenraum des Gehäuses 13 zugewandte Steg 43 nicht an der Oberseite des Abschlußteils 36 ausgebildet sein. Dadurch ist eine bessere Kontaktierung des Abschlußteils 36 mit der anschließend, wie weiter unten noch ausgeführt wird, einzubringenden Vergußmasse möglich.

Die nähere Ausgestaltung des Abschlußteils 36 ist in Figur 3 dargestellt. Es weist an seinen drei Schmalseiten die oben beschriebenen Stege 42, 43 und die Ringnut 44 auf. Ferner hat es eine etwa mittige Bohrung 50 zur Aufnahme des Anschlußkabels 30. Das Abschlußteil 36 ist entlang einer Linie 51 aufgeschnitten, die von der Bohrung 50 nach außen verläuft. Diametral gegenüber der Mündung der Linie 51 in die Bohrung 50 ist an der Innenwand dieser Bohrung 50 ein Schlitz 52 ausgebildet; Die dadurch entstehende dünne Wandstelle wirkt als Scharnier. Das Abschlußteil 36 ist dadurch an der dünnen Wandstelle des Schlitzes 52 elastisch, d.h, beweglich ausgebildet und kann entlang der Linie 51 geöffnetwerden. Bei der Auswahl der Schnittlinie 51 ist darauf zu achten, daß am Abschlußteil 36 ein etwa längliches Teil 53 entsteht. Das Teil 53 weist eine Nase 54 mit Widerhaken auf, die in eine ihr zugewandte Ausnehmung 55 des Abschlußteils 36 eingreifen kann. Ferner hat das Teil 53 an seiner Außenwand eine zweite Nase 56 mit der es in eine in Figur 4 dargestellte Ausnehmung 57 in der Innenwand des Gehäuseoberteils 34 eingreift. Auf der der Ausnehmung 55 gegenüberliegenden Außenwand des Abschlußteils 36 ist eine Ausnehmung 58 ausgebildet, in die eine Nase 59 des Gehäuseoberteils 36 eingreift.

In Figur4 ist das Abschlußteil 36 eingebaut in das Gehäuseoberteil 34 dargestellt. Durch die Wirkverbindung zwischen der Ausnehmung 57 und der Nase 56 bzw. der Ausnehmung 58 und der Nase 59 wird das Abschlußteil 36 in senkrechter Richtung im Gehäuseoberteil 34 fixiert. Die Ausbildung der Ausnehmungen bzw. der Nasen am Abschlußteil 36 bzw. am Gehäuseoberteil 34 können auch jeweils gegeneinander vertauscht sein.

Zur Montage wird der Spulenkörper 16 mit der bereits vorher montierten Wicklung 19, dem Polstück 22 und dem Permanentmagneten 25 von oben her in das Gehäuse 13 eingesetzt und mit Hilfe der Nase 33 im Innern 15 fixiert und gegen den Boden 17 gedrückt. In einer getrennten Montage wird das Abschlußteil 36 entlang der Linie 51 auseinandergebogen, wobei der Drehpunkt am Rande des Schlitzes 52 liegt. Dadurch kann das Abschlußteil 36 über das Anschlußkabel 30 gestülptwerden. Anschließend rastet die Nase 54 des Teils 53 insbesondere mit den Widerhaken in die Ausnehmung 55 ein. Die Größe der Bohrung 50 ist dabei auf den Durchmesser des Anschlußkabels 30 abzustimmen, so daß das Abschlußteil 36 fest auf dem Anschlußkabel 30 aufsitzt. Darauf wird das Abschlußtei 36 mit seinen beiden Stegen 42, 43 in die beiden Ringnuten 37, 38 des Gehäuseoberteils 34 eingesetzt. Dabei greifen gleichzeitig auch die Nase 56 in die Ausnehmung 57 und die Nase 59 des Gehäuseoberteils 34 in die Ausnehmung 58 ein. Die Nasen und die Ausnehmungen wirken dabei wie Verschlüsse, so daß das Abschlußteil 36 fest in das Gehäuseoberteil 34 eingebracht ist und auch nicht herausgerissen werden kann. Es ist auch eine andere Schnittlinie 51 denkbar, entscheidend ist aber, daß eine in senkrechter Richtung, d.h. in Richtung der Längsachse des Spulenkörpers 16 nach dem Einbau möglichst nicht mehr lösbare Verbindung entsteht.

Die Stränge 28, 29 des Anschlußkabels 30 werden anschließend an die Stromschienen 27 angelötet. Zum Schluß wird das Gehäuse 13 mit einem Kunststoff, z.B. einem Harz ausgegossen und somit feuchtedicht versiegelt.

In Figur 5 ist eine Abwandlung des Ausführungsbeispiels dargestellt. Es wird hier ein nach unten offenes Gehäuse 62 verwendet. Bei der Montage wird der Spulenkörper 16a von unten her in das Gehäuse 62 eingeführt. Der Spulenkörper 16a weist dabei ein plattenförmiges Abschlußteil 63 auf, das zugleich als Boden für das Gehäuse 62 dienen kann. Dieses Abschlußteil 63 wird nach dem Einbringen des Spulenkörpers 16a durch z.B. Ultraschallschweißen am Gehäuse 62 befestigt. Dadurch ist der Spulenkörper 16a zugleich im Gehäuse 62 fixiert und das Gehäuse 62 selbst dicht abgeschlossen. Eine Nase im Gehäuse zur Befestigung ist nicht mehr notwendig. Die weitere Ausbildung bzw. Herstellung entspricht analog dem oben beschriebenen Ausführungsbeispiel.

Die Funktionsweise eines Drehzahlfühlers, der nach dem induktiven Prinzip arbeitet, ist herkömmlich bekannt, so daß hier nicht näher darauf eingegangen werden braucht.

## Patentansprüche

1. Meßaufnehmer mit einem auf mindestens einer Seite offenen Gehäuse (13), einem Meßelement (16, 19, 22) und einem seitlich durch eine zweite Gehäuseöffnung (35) aus dem Gehäuse (13) herausgeführten Anschlußkabel (30) des Meßelements (16, 19, 22), dadurch gekennzeichnet, daß die zweite Gehäuseöffnung (35) mit mindestens einer anderen Öffnung des Gehäuses eine gemeinsame Öffnung bildet, daß in die zweite Gehäuseöffnung (35) für das Anschlußkabel (30) ein Abschlußteil (36) eingesetzt ist, das das Anschlußkabel (30) in mindestens einer Richtung fixiert und Teil der Gehäusewandung ist und die zweite Gehäuseöffnung (35) in Richtung des Anschlußkabels (30) verschließt, so daß die andere, in Richtung des Meßelements (16,19,22) ausgerichtete, Öffnung zum Einfüllen von das Gehäuse (13) ausfüllendem Kunststoff verbleibt.

2. Meßaufnehmer nach Anspruch 1, dadurch gekennzeichnet, daß das Gehäuse (13) im Bereich der Öffnung (35) mindestens eine vertiefung (37, 38) und/oder mindestens eine Erhöhung (39) aufweist und daß am Abschlußtei (36) mitdiesen korrespondierende Vertiefungen (44) und/oder Erhöhungen (4Z, 43) ausgebildet sind.

3. Meßaufnehmer nach Anspruch 1 und/oder 2, dadurch gekennzeichnet, daß das Abschlußteil (36) am Außenumfang mindestens eine Nase (56) aufweist, mit der es in eine Ausnehmung (57) im Gehäuse (13) im Bereich der Öffnung (35) eingreift.

4. Meßaufnehmer nach Anspruch 1 und/oder 2, dadurch gekennzeichnet, daß das Abschlußteil (36) am Außenumfang mindestens eine Ausnehmung (58) aufweist, in die eine an der Gehäusewand angebrachte Nase (59) eingreift.

5. Meßaufnehmer nach Anspruch 3 und/oder 4, dadurch gekennzeichnet, daß das Abschlußteil (36) mindestens eine Ausnehmung (58) und mindestens eine Nase (56) am Außenumfang aufweist.

6. Meßaufnehmer nach einem der Ansprüche 1 bis 5, dadurch gekennzeichnet, daß das Abschlußteil (36) am Anschlußkabel (30) aufgespritzt ist.

7. Meßaufnehmer nach einem der Ansprüche 1 bis 6, dadurch gekennzeichnet, daß das Abschlußteil (36) eine als Scharnier wirkende dünne Wandstelle (52) aufweist und daß das Abschlußteil (36) auf einer Seite entlang einer Linie (51) aufgeschnitten ist.

8. Meßaufnehmer nach Anspruch 7, dadurch gekennzeichnet, daß das Abschlußteil (36) im Bereich der Linie (51) eine Nase (54) und eine mit dieser zusammenwirkende Ausnehmung (55) aufweist, so daß eine mechanische Fixierung entsteht.

9. Meßaufnehmer nach einem der Ansprüche 1 bis 8, dadurch gekennzeichnet, daß das Meßelement aus einem Spulenkörper (16) mit darauf angebrachter elektrischer Wicklung (19), einem darin angeordneten Polstück (22) und einem Permanentmagneten (25) besteht und daß das Polstück (22) und der Permanentmagnet (25) in Wirkverbindung mit einem umlaufenden Körper (12) zur Erfassung dessen Drehzahl steht.

10. Meßaufnehmer nach einem der Ansprüche 1 bis 9, dadurch gekennzeichnet, daß das Gehäuse (13) aus Kunststoff besteht und im Innern (15) eine Rastnase (33) zur Fixierung des Spulenkörpers (16) aufweist und daß das Gehäuse (13) einen fest angebrachten Boden (17) hat.

11. Meßaufnehmer nach einem der Ansprüche 1 bis 9, dadurch gekennzeichnet, daß das Gehäuse (13) aus Kunststoff besteht und nach unten geöffnet ist, und daß der Spulenkörper (16) ein Abschlußteil (63) aufweist, das als Boden des Gehäuses (62) dient.

## Claims

1. Measurement detector with a housing (13) open on at least one side, a measuring element (16,19, 22) and a connection cable (30) of the measuring element (16, 19, 22) conveyed laterally through a second housing opening (35) out of the housing (13), characterized in that the second housing opening (35) forms a common opening with at least one other opening of the housing, in that a closing part (36) is inserted into the second housing opening (35) for the connection cable (30), which closing part fixes the connection cable (30) in at least one direction and is part of the housing wall and closes the second housing opening (35) in the direction of the connection cable (30), so that the other opening directed in the direction of the measuring element (16, 19, 22) remains for filling in plastic which fills up the housing (13).

2. Measurement detector according to Claim 1, characterized in that the housing (13) has in the region of the opening (35) at least one recess (37, 38) and/or at least one raised part (39), and in that recesses (44) and/or raised parts (42, 43) corresponding to these are formed on the closing part (36).

3. Measurement detector according to Claim 1 and/or 2, characterized in that the closing part (36) has on the outer periphery at least one lug (56) with which it engages in a recess (57) in the housing (13) in the region of the opening (35). 4. Measurement detector according to Claim 1 and/or 2, characterized in that the closing part (36) has on the outer periphery at least one recess (58) in which a lug (59) fitted on the housing wall engages.

5. Measurement detector according to Claim 3 and/or 4, characterized in that the closing part (36) has at least one recess (58) and at least one lug (56) on the outer periphery.

6. Measurement detector according to any of Claims 1 to 5, characterized in that the closing part (36) is moulded onto the connection cable (30).

7. Measurement detector according to any of Claims 1 to 6, characterized in that the closing part (36) has a thin wall part (52) acting as a hinge, and in that the closing part (36) is cut open along a line (51) on one side.

8. Measurement detector according to Claim 7, characterized in that in the region of the line (51) the closing part (36) has a lug (54) and a recess (55) interacting therewith, so that a mechanical fixing is produced.

9. Measurement detector according to any of Claims 1 to 8, characterized in that the measuring element is composed of a coil former (16) with electric winding (19) placed thereon, a pole piece (22) disposed therein and a permanent magnet (25), and in that the pole piece (22) and the permanent magnet (25) are operatively connected to a rotating body (12) for recording its speed of rotation.

10. Measurement detector according to any of Claims 1 to 9, characterized in that the housing (13) is made of plastic and has on the inside (15) a snap-in locking lug (33) forfixing the coil former (16), and in that the housing (13) has a fixed bottom (17).

11. Measurement detector according to any of Claims 1 to 9, characterized in that the housing (13) is made of plastic and is open at the bottom, and in that the coil former (16) has a closing part (63) which serves as the bottom of the housing (62).

## Revendications

1. Capteur de mesure comportant un boîtier (13) dont au moins un côté est ouvert, un élément de mesure (16, 19, 22) et un câble de raccordement (30) pour l'élément de mesure (16,19,22) sortant latéralement d'une seconde ouverture (35) du boîtier (13), capteur caractérisé en ce que la seconde ouverture (35) du boitierforme une ouverture commune avec au moins une autre ouverture du boîtier et en ce qu'une pièce de fermeture (36) est placée dans la seconde ouverture (35) du boîtier pour le câble de raccordement (30), pièce qui bloque le câble de racordement (30) dans au moins une direction et fait partie de la paroi du boîtier et ferme la seconde ouverture de boîtier (35) en direction du câble de raccordement (30) pour que l'autre ouverture alignée sur l'élément de mesure (16, 19, 22) subsiste pour couler la matière synthétique destinée à remplir le boîtier (13).

2. Capteur de mesure selon la revendication 1, caractérisé en ce que le boîtier (13) comporte au moins une cavité (37, 38) au niveau de l'ouverture (35) et/ou au moins un bossage (39) et en ce que sur la pièce de fermeture (36), se trouvent des cavités (44) et/ou des bourrelets (42, 43) correspondants.

3. Capteur de mesure selon la revendication 1 et/ou 2, caractérisé en ce que la pièce de fermeture (36) présente au moins un bec (56) à sa périphérie extérieure, bec par lequel cette pièce vient prendre dans une cavité (57) du boîtier (13) au niveau de l'ouverture (35).

4. Capteur de mesure selon la revendication 1 et/ou 2, caractérisé en ce que la pièce de fermeture (36) comporte au moins une cavité (58) à sa périphérie, cavité dans laquelle vient prendre un bec (59) réalisé sur la paroi du boîtier.

5. Capteur de mesure selon la revendication 3 et/ou 4, caractérisé en ce que la pièce de fermeture (36) comporte au moins une cavité (58) et au moins un bec (58) à sa périphérie extérieure.

6. Capteur de mesure selon l'une des revendications 1 à 5, caractérisé en ce que la pièce de fermeture (36) est injectée sur le câble de raccorde- lent (30).

7. Capteur de mesure selon l'une des revendications 1 à 6, caractérisé en ce que la pièce de fermeture (36) présente une partie de paroi (52) mince, fonctionnant comme charnière et en ce que la pièce de fermeture (36) est coupée sur un côté, le long d'une ligne (51).

8. Capteur de mesure selon la revendication 7, caractérisé en ce que la pièce de fermeture (36) comporte au niveau de la ligne (51), un bec (54) et une cavité (55) coopérant avec ce bec pourfor- mer un moyen de fixation mécanique.

9. Capteur de mesure selon l'une des revendications 1 à 8, caractérisé en ce que l'élément de mesure se compose d'un corps de bobine (16) portant un enroulement électrique (19) avec à l'intérieur une pièce polaire (22) et un aimant permanent (25) et en ce que la pièce polaire (22) et l'aimant permanent (25) coopèrent avec un organe rotatif (12) pour détecter la vitesse de rotation de ce dernier.

10. Capteur de mesure selon l'une des revendications 1 à 9, caractérisé en ce que le boîtier (13) est en matière synthétique et comporte à l'intérieur (15) un bec (33) pourfixer le corps de bobine (16) et en ce que le boîtier (13) comporte un fond (17) fixe.

11. Capteur de mesure selon l'une des revendications 1 à 9, caractérisé en ce que le boîtier (13) est en matière synthétique et est ouvert vers le bas et en ce que le corps de bobine (16) comporte une pièce de fermeture (63) constituant le fond du boîtier (62).
